Europäisches Patentamt

European Patent Office

Office européen des brevets

(19)

(11) **EP 0 749 174 A1**

(12) **DEMANDE DE BREVET EUROPEEN**

(43) Date de publication:
**18.12.1996 Bulletin 1996/51**

(51) Int Cl.$^6$: **H01P 1/12**

(21) Numéro de dépôt: **96401302.3**

(22) Date de dépôt: **14.06.1996**

(84) Etats contractants désignés:
**DE ES FR GB IT NL SE**

(30) Priorité: **16.06.1995 FR 9507239**

(71) Demandeur: **AEROSPATIALE Société Nationale Industrielle
75781 Paris Cédex 16 (FR)**

(72) Inventeur: **Chaperon, Pierre
06200 Nice (FR)**

(74) Mandataire: **Rinuy, Santarelli
14, avenue de la Grande Armée
75017 Paris (FR)**

(54) **Réseau de commutateurs pour la connexion de canaux redondants**

(57)  Un réseau de commutateurs de type T ou R ayant $\underline{n}$ entrées et $\underline{n+p}$ sorties (ou inversement) tel que n'importe quelle combinaison de $\underline{n}$ sorties puisse être connectée à n'importe quelle combinaison des $\underline{n}$ entrées., $\underline{n}$ et $\underline{p}$ étant des entiers quelconques prédéterminés tels que $\underline{p}$ soit supérieur à 2 et que le couple (n, p) soit différent du couple (8, 4), comporte :

- deux étages extrêmes formés chacun d'un nombre $\underline{a}$ de blocs redondants, choisis parmi trois types possibles avec une entrée, une entrée et une sortie, ou une entrée et deux sorties,

- un nombre $\underline{b}$ d'étages intermédiaires successifs, disposés entre les étages extrêmes et contenant chacun un nombre $\underline{a}$ de blocs nominaux, formés de deux commutateurs connectés à deux entrées et deux sorties,

- un nombre (b+1) de blocs d'interconnexion pour relier les blocs entre eux, avec :

. $\underline{a}$ est tel que $\underline{2a}$ soit le plus petit entier supérieur ou égal à p,

. $\underline{b}$ est le nombre entier tel que le nombre $\underline{c}$ défini par $c = n - 2ab$ soit strictement positif et inférieur ou égal à $\underline{2a}$.

| | | |
|---|---|---|
| bloc de type r | bloc de type r | bloc de type r |
| bloc d'interconnexion | | |
| bloc nominal | bloc nominal | bloc nominal |
| bloc d'interconnexion | | |
| bloc nominal | bloc nominal | bloc nominal |
| bloc d'interconnexion | | |
| bloc nominal | bloc nominal | bloc nominal |
| bloc d'interconnexion | | |
| bloc de type r | bloc de type r | bloc de type r |

Fig.6

## Description

L'invention concerne les réseaux de commutateurs prévus pour permettre une redondance dans des circuits de traitement à canaux multiples, tels que, par exemple, ceux utilisés dans des charges utiles de satellites de télécommunications.

A cause de l'impossibilité de réparer les satellites lorsqu'ils sont en orbite, certains de leurs équipements sont doublés par des équipements de secours ; ceux-ci, aussi appelés équipements redondants, ne sont activés qu'en cas de défaillance des équipements nominaux. Il faut à cet effet prévoir, en amont et en aval des équipements nominaux ou redondants montés en parallèles, des réseaux de commutateurs (aussi appelés matrices de commutateurs) qui ont des entrées et des sorties en nombre différents, qui sont symétriques l'un de l'autre et qui sont adaptés à être commandés en synchronisme en sorte que leurs configurations soient à tout instant symétriques l'une de l'autre et que le reste de la charge utile soit insensible à l'identité des équipements qui sont réellement en service à cet instant.

On comprend aisément que les risques de pannes sont beaucoup plus importants pour des équipements actifs que pour des éléments actifs.

Ces risques de pannes apparaissent notamment dans les charges utiles de satellites de communications qui comportent typiquement une ou plusieurs antenne (s) de réception, un circuit de réception, un étage de démultiplexage où les signaux correspondant aux divers canaux sont séparés, un étage de traitement servant pour l'essentiel à amplifier ces signaux, un étage de multiplexage et un circuit d'émission connecté à des antennes d'émission.

La pratique a montré que les équipements d'amplification sont susceptibles de défaillances et c'est principalement pour tenir compte de ce que le nombre de canaux disponibles pour amplifier les signaux est en conséquence supérieur au nombre de signaux à traiter (ou nombre de canaux nominaux) que les réseaux de commutateurs ont été développés.

Si n est le nombre d'équipements nominaux et $p$ le nombre d'équipements de secours, le réseau de commutateurs amont (ou aval) doit avoir $n$ entrées et $n+p$ sorties (ou inversement).

Il est clair que ces réseaux amont et aval sont destinés à maintenir un fonctionnement nominal avec $n$ équipements jusqu'à un total de $p$ pannes. Ce ne sera que lors d'une panne suivante que la mission du satellite sera affectée.

Le problème s'est en conséquence posé de concevoir des réseaux de commutateurs en sorte de pouvoir faire face, à partir d'une série de $n$ équipements nominaux, à n'importe quelle succession de $p$ défaillances dans ces équipements nominaux ou dans les équipements redondants qui sont mis en service.

On comprend aisément que ce problème est d'autant plus complexe que $n$ et $p$ sont grands

On comprend également que la solution dépend du type de commutateur utilisé. On se limitera ici aux commutateurs ayant quatre pattes.

On connaît en effet trois grandes catégories de commutateurs :

- les commutateurs de type DPDT ou C adaptés à tourner par pas de 90° et adaptés à connecter n'importe quelle patte donnée soit à l'une soit à l'autre des pattes voisines, mais jamais à la patte qui lui est opposée ; ces commutateurs n'ont en fait que deux configuration distinctes de connexion ;
- les commutateurs de type R adaptés à tourner par pas de 45° et adaptés à connecter n'importe quelle patte donnée à n'importe laquelle des trois autres pattes, seul le cas de la connexion entre des pattes opposées impliquant une isolation de chacune des autres pattes ; ces commutateurs ont quatre configurations distinctes de connexion (incluant les deux configurations de connexion des commutateurs de type DPDT ou C ;
- les commutateurs de type T adaptés à tourner par pas de 45° et adaptés à connecter n'importe quelle patte donnée à n'importe quelle autre patte tout en connectant les deux autres pattes, le cas de la connexion entre des pattes opposées impliquant une connexion, croisée, des autres pattes ; ces commutateurs ont trois configurations distinctes de connexion (les deux configurations décalées de 90° correspondant à des connexions en ligne droite définissent ici des modes de connexion identiques pour les quatre pattes à la différence du cas des commutateurs de type R.

Ces divers commutateurs existent en technologie guide d'onde et en technologie du type coaxial.

Les commutateurs les plus utilisés sont ceux des types R et T et ce seront des commutateurs de ces types qui seront pris en considération dans la suite de l'exposé (il faut noter - voir ci-dessus - que l'usage des commutateurs de type R est plus contraignant que pour le type T).

En fait on connaît déjà divers réseaux formés de tels commutateurs, mais ceux-ci ne correspondent qu'à quelques cas particuliers.

Ainsi, le document DE-4.203.174 propose des réseaux de commutateurs de type R connectés en anneau, dont certains, séparés par un ou deux commutateurs, sont connectés en pont les uns avec les autres. La description ne concerne réellement que le cas où la différence entre le nombre d'entrées et le nombre de sorties vaut 4. La figure 2 correspond à 9 entrées et 13 sorties et utilise 15 commutateurs. La figure 3 correspond au cas 10:14 avec 16 commutateurs et la figure 4 correspond au cas 12/16 avec 18 commutateurs.

Le document DE-4.203.175 porte sur le cas 12/16 du document précité.

Le document DE-4.203.176 contient le même genre d'enseignements (connexion en anneau des commutateurs dont certains sont en outre connectés en pont, d'où une structure en anneau-étoile), pour des plus grandes différences entre les nombres d'entrées et de sorties. Le cas 9:15 prévoit 15 commutateurs. Le cas 10:18 utilise 18 commutateurs mais conduit à une redondance seulement partielle (à titre d'exemple, si les sorties 1 à 4 et 9 à 11 doivent être neutralisées, il est impossible de connecter l'entrée 2 à une sortie).

Le document FR-2.589.632 concerne le cas où le nombre d'entrées nominal est compris entre 8 et 12 et où on veut pouvoir faire face à quatre pannes ; trois positions seulement sont envisagées pour les commutateurs : traversée, connexion à droite, connexion à gauche. Il comporte de première et seconde sections interconnectées et comprenant chacune de quatre à six commutateurs connectés en anneau et deux autres commutateurs. Le nombre de commutateur est égal au nombre de sorties.

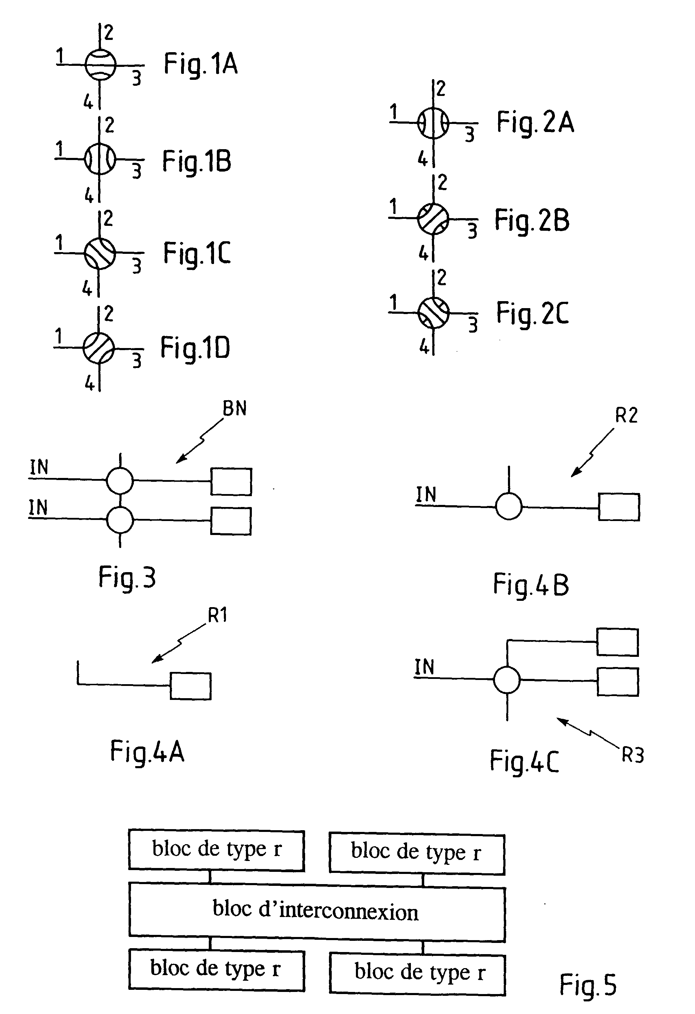

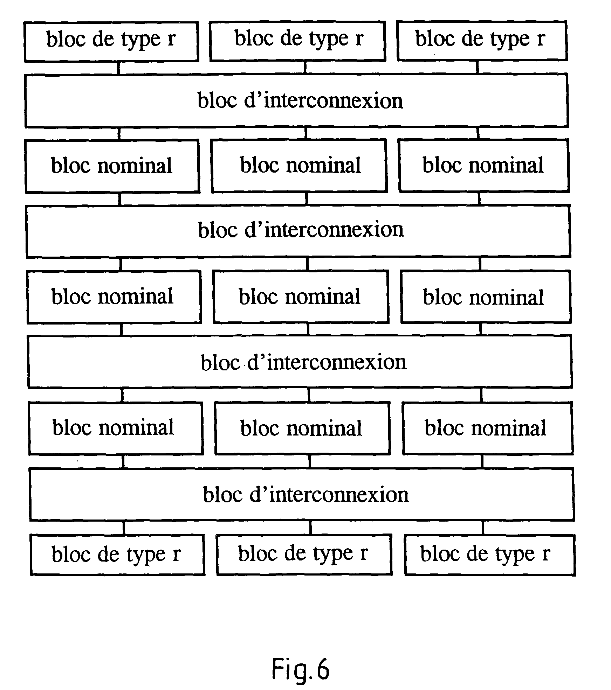

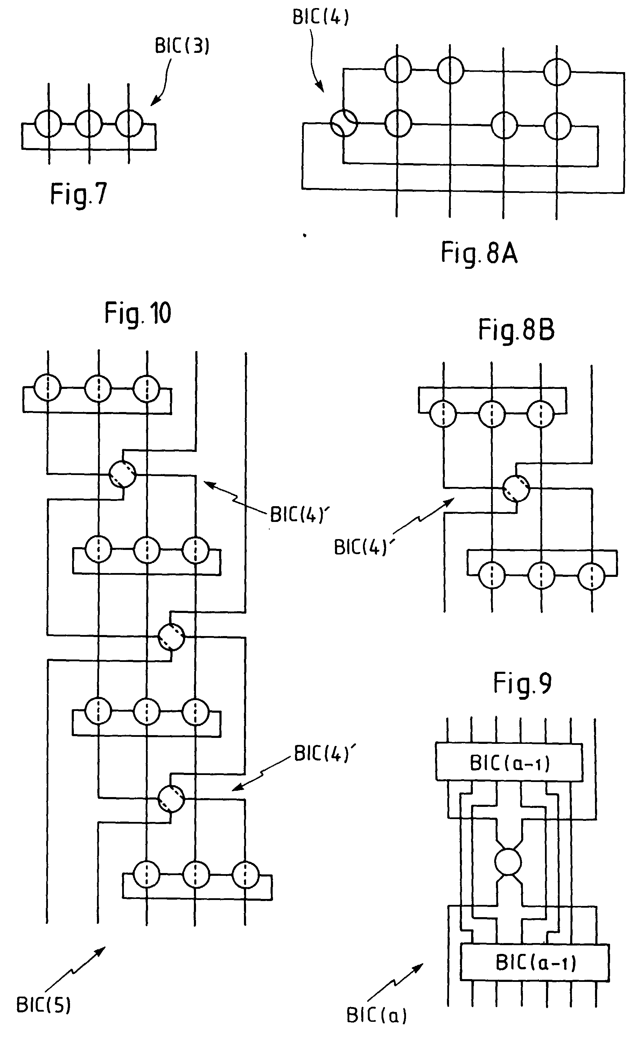

Le document FR-2.698.746 décrit plusieurs réseaux formés de commutateurs nodaux reliés les uns aux autres par au moins deux chemins comprenant chacun au moins au moins un commutateur de connexion. Trois cas sont représentés. Le cas 9:10 de la figure 6 utilise 12 commutateurs (alors qu'un simple montage linéaire permettrait de n'utiliser que 9 commutateurs). La figure 7 décrit le cas 18:18 avec 27 commutateurs. La figure 5 décrit le cas 8:12 avec 10 commutateurs. Il est important de noter à propos de la figure 7 (autant d'entrées que de sorties) que ce document ne vise pas nécessairement à garantir un régime nominal où toutes les entrées (ou toutes les sorties) sont utilisées en profitant du fait qu'il y a un plus grand nombre de sorties (ou d'entrées) ; il en découle qu'il est clairement admis que le réseau de commutateurs puisse être surdimensionné par rapport aux besoins.

Enfin le document FR-2.345.824 concerne des réseaux de commutateurs connectés en anneau ; dans plusieurs cas, les entrées sont dédoublées (avec mise en oeuvre de commutateurs particuliers de type à S n'ayant que trois pattes) : le nombre de sorties (ou le nombre d'amplificateurs) est double de celui des entrées (cas 5:10). La figure 5 représente le cas 8:12 avec 12 commutateurs en anneau dont quatre sont diamétralement reliés.

En règle générale, les documents précités décrivent des cas particuliers et en identifient les points communs ; par contre aucun d'entre eux ne donne les moyens de construire un réseau de commutateurs à n entrées et $\underline{n+p}$ sorties (ou l'inverse) garantissant que, quelles que soient les valeurs de n et de p, ce réseau puisse assurer la connexion opérationnelle entre $\underline{n}$ canaux d'entrée et $\underline{n}$ voies de traitement en état de marche parmi $\underline{n+p}$ voies de traitement possibles au départ, et ce jusqu'à l'occurence de $\underline{p}$ pannes quelconques dans lesdites voies de traitement. Par ailleurs, rien n'est proposé pour n'utiliser qu'un nombre de commutateurs aussi faible que possible.

Or les besoins actuels en télécommunications conduisent à souhaiter disposer d'un nombre de plus en plus important de canaux (à choisir donc des valeurs de $\underline{n}$ de plus en plus élevées). Or l'un des freins à une belle évolution est que l'on ne dispose pas forcément d'un réseau de commutateurs pour le couple (n, p) que l'on souhaite.

Par ailleurs, la structure en anneau communément proposée dans des réseaux de commutateurs connus à ce jour ne permettent pas vraiment de tenir compte des différences de fréquences des signaux à traiter et donc des différences pouvant exister de ce fait entre les équipements prévus pour traiter ces signaux.

L'invention découle d'une méthodologie qui a pu être mise au point pour répondre aux objectifs précités.

Elle vise ainsi un réseau de commutateurs de type R ou T (à quatre pattes et au moins trois positions différentes) permettant d'assurer la liaison de $\underline{n}$ entrées à n sorties parmi n sorties nominales et $\underline{p}$ sorties redondantes, même après l'occurence d'un nombre de pannes rendant inutilisables jusqu'à $\underline{p}$ sorties, et ce quelles que soient les valeurs choisies pour $\underline{n}$ et $\underline{p}$ et en utilisant un nombre de commutateurs aussi faible que possible. Bien entendu les notions précitées d'entrée et de sortie peuvent être inversées pour tenir compte de ce qu'il y a en pratique deux réseaux symétriques en amont et en aval des $\underline{n+p}$ équipements de traitement. A titre subsidiaire, dès lors que les entrées (ou sorties) sont classées par ordre croissant ou décroissant des fréquences des signaux à traiter, l'invention a pour objet complémentaire de permettre le remplacement d'une sortie devenue inutilisable par une sortie redondante correspondant à des performances de traitement aussi proches que possible de cette dernière.

L'invention propose à cet effet un réseau de commutateurs ayant $\underline{n}$ entrées et $\underline{n+p}$ sorties (ou inversement) destiné à connecter $\underline{n}$ canaux à $\underline{n}$ circuits de traitement quelconque d'un ensemble comportant $\underline{n}$ circuits de traitement nominaux et $\underline{p}$ circuits de traitement redondants, $\underline{n}$ et $\underline{p}$ étant des entiers quelconques prédéterminés tels $\underline{p}$ soit supérieur à 2 et que le couple (n, p) soit différent du couple (8, 4), les commutateurs étant du type à quatre pattes et au moins trois positions, ce réseau comportant :

- deux étages extrêmes formés chacun d'un nombre $\underline{a}$ de blocs redondants (R1, R2, R3) montés en parallèle,
- un nombre b d'étages intermédiaires successifs, disposés entre les étages extrêmes et contenant chacun un nombre $\underline{a}$ de blocs nominaux (N) montés en parallèle,
- un nombre (b+1) de blocs d'interconnexion montés chacun entre deux des étages intermédiaires ou extrême, des blocs et ces nombres étant définis comme suit :

  • $\underline{a}$ est tel que $\underline{2a}$ soit le plus petit entier supérieur ou égal à p,

- <u>b</u> est le nombre entier tel que le nombre <u>c</u> défini par c=n - 2ab soit strictement positif et inférieur ou égal à <u>2a</u>,

- chaque bloc nominal est formé d'une chaîne de deux commutateurs connectés chacun à une entrée et une sortie,

- chaque bloc redondant étant, soit d'un premier type constitué d'une sortie, soit d'un second type constitué d'un commutateur connecté à une entrée et à une sortie en ayant une patte neutralisée, soit d'un troisième type constitué d'un commutateur connecté à une entrée et deux sorties,

- les deux étages extrêmes comportant conjointement un nombre <u>d</u> égal à (2a - p) de blocs redondants du second type, un nombre (c - d) de commutateurs du troisième type, et un nombre de (p - c + d) de commutateurs du premier type,

chaque bloc d'interconnexion ayant un nombre <u>2a</u> de pattes et étant constitué de commutateurs connectés entre eux tels que n'importe quelle combinaison de a pattes de ce bloc puisse être mise en connexion avec n'importe quelle combinaison de a autres pattes

On appréciera que la structure ainsi définie est de type modulaire, avec des blocs ou modules élémentaires qui sont pour la plupart indépendants des valeurs de <u>n</u> et <u>p</u> (sauf les blocs d'interconnexion).

Il se trouve que la structure ainsi définie se trouve correspondre, dans le cas (n = 8, p = 4), à un schéma identique à celui de la figure 5 du document FR-2.698.746 indiqué ci-dessus. Mais, comme on l'a vu, ce document se préoccupe d'un problème technique bien moins sévère que celui de l'invention (connecter certaines entrées à certaines sorties), et propose pour les autres cas des solutions tout à fait différentes. Il paraît en conséquence approprié de définir l'invention par la définition générale précitée, en excluant simplement le cas (n = 8, p = 4).

A titre préféré, pour tenir compte de ce que les cas p = 1 et p = 2 peuvent se traiter avec une simple chaîne de commutateurs, la valeur de <u>p</u> est avantageusement supérieure à 2.

Il faut par ailleurs noter qu'aucun des documents cités n'a proposé de solutions pour des valeurs impaires de <u>p</u> ; cette carence est palliée par l'invention.

Le cas p=4 a en fait fait l'objet d'un grand nombre de propositions plus ou moins performantes. L'invention donne pourtant des solutions fiables pour n'importe quelle valeur de <u>p</u> supérieure à 4.

Par ailleurs, les solutions connues se limitent en pratique à un nombre d'entrées égal à 12. L'invention donne par contre une solution pour toute valeur de <u>n</u> supérieure.

Le bloc d'interconnexion est, on l'a vu, le seul à dépendre du problème posé ; il comporte <u>2a</u> pattes. Il con-tient de préférence un nombre de commutateurs égal à $(2^{a-1}-1)$. On peut alors constater que le réseau ainsi constitué est non seulement plus performant que les solutions citées mais comporte en outre un nombre total plus faible de commutateurs.

Des objets, caractéristiques et avantages de l'invention ressortent de la description qui suit, donnée à titre d'exemple non limitatif, en regard des dessins annexés sur lesquels :

- les figures 1A à 1D représentent un commutateur de type R dans ses quatre positions possibles ;

- les figures 2A à 2C représentent un commutateur de type T dans ses trois positions possibles ;

- la figure 3 est le schéma d'un bloc nominal ;

- les figures 4A, 4B et 4C sont les schémas de blocs redondants des premier, second et troisième types ;

- la figure 5 est le schéma de principe d'un réseau sans bloc nominal dont l'ordre de redondance est 3 ou 4 ;

- la figure 6 est le schéma de principe d'un réseau ayant 18 à 23 entrées et une redondance d'ordre 5 ou 6 ;

- la figure 7 est le schéma d'un bloc d'interconnexion pour une redondance d'ordre 5 ou 6 ;

- la figure 8A est le schéma d'un bloc d'interconnexion pour une redondance d'ordre 7 ou 8 ;

- la figure 8B en est une variante ;

- la figure 9 est le schéma d'un bloc d'interconnexion correspondant à une valeur donnée de <u>a</u> ;

la figure 10 est le schéma d'un bloc d'interconnexion pour une redondance d'ordre 9 ou 10 ;

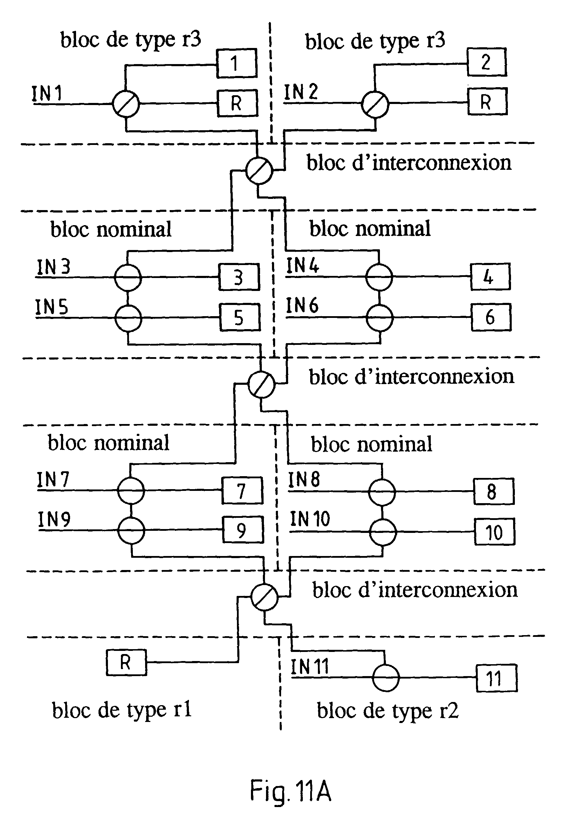

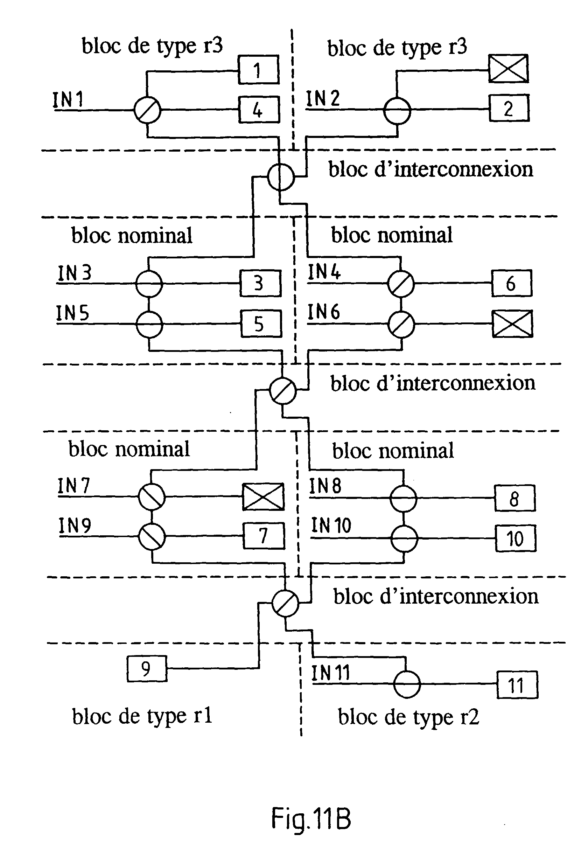

- la figure 11A est le schéma complet d'un réseau de commutateurs pour n = 11 et p = 3, en configuration nominale ;

- la figure 11B est le schéma de ce réseau, après intervention de trois pannes ;

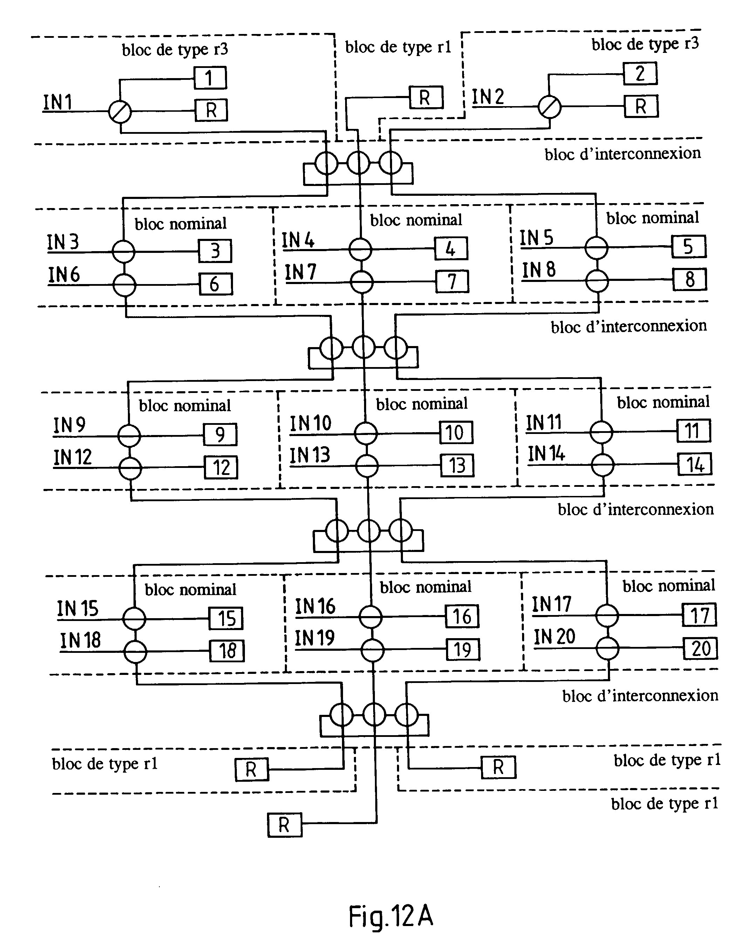

- la figure 12A est le schéma complet d'un réseau de commutateurs pour n = 20 et p = 6, en configuration nominale ;

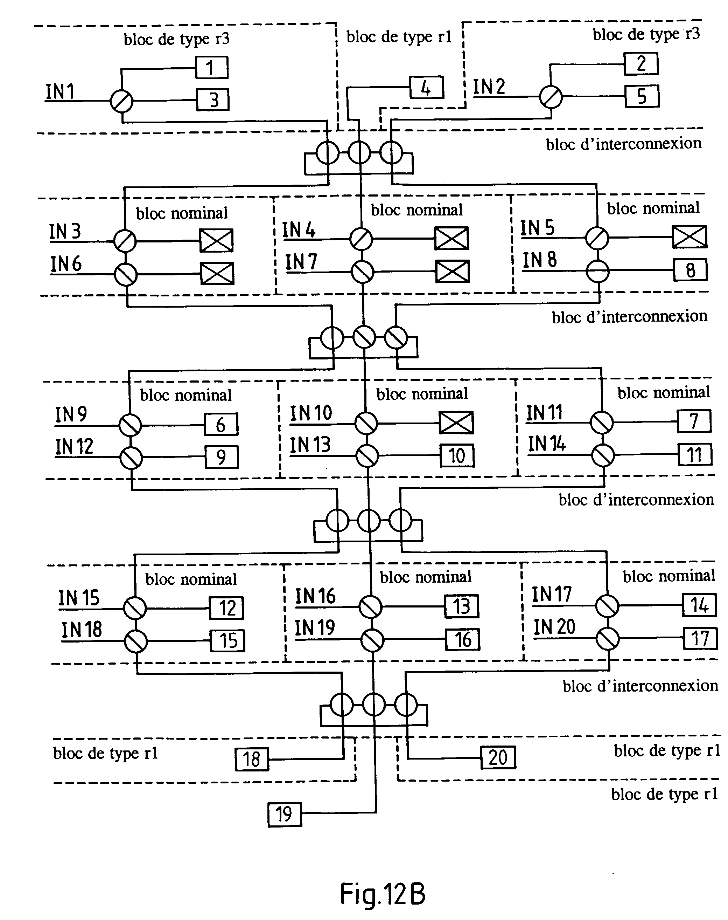

- la figure 12B est le schéma de ce réseau, après une première combinaison de 6 pannes ;

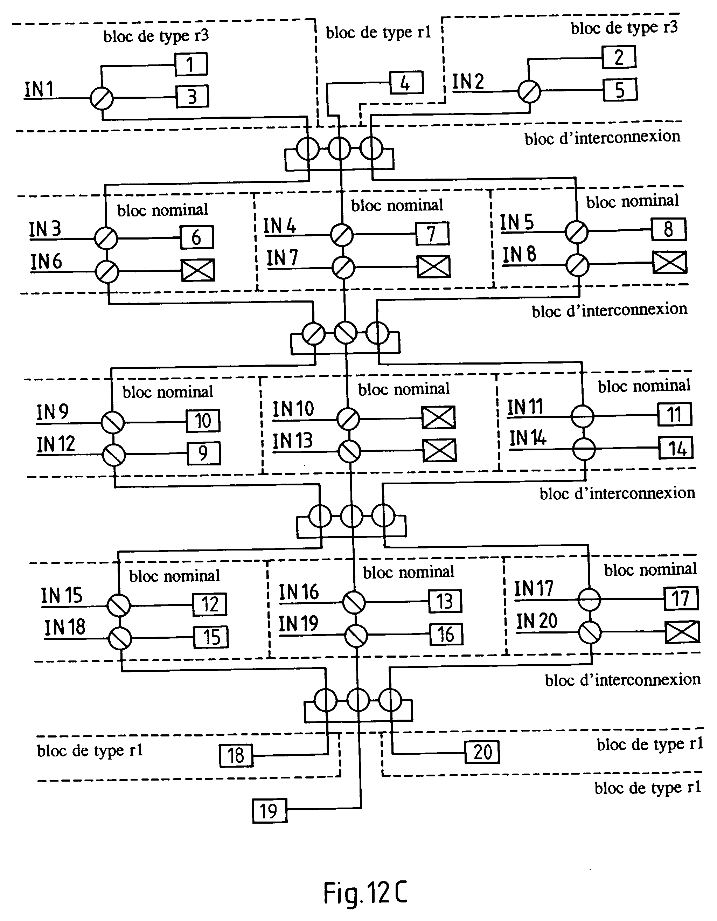

- la figure 12C est le schéma de ce réseau après une seconde combinaison de 6 autres pannes.; et

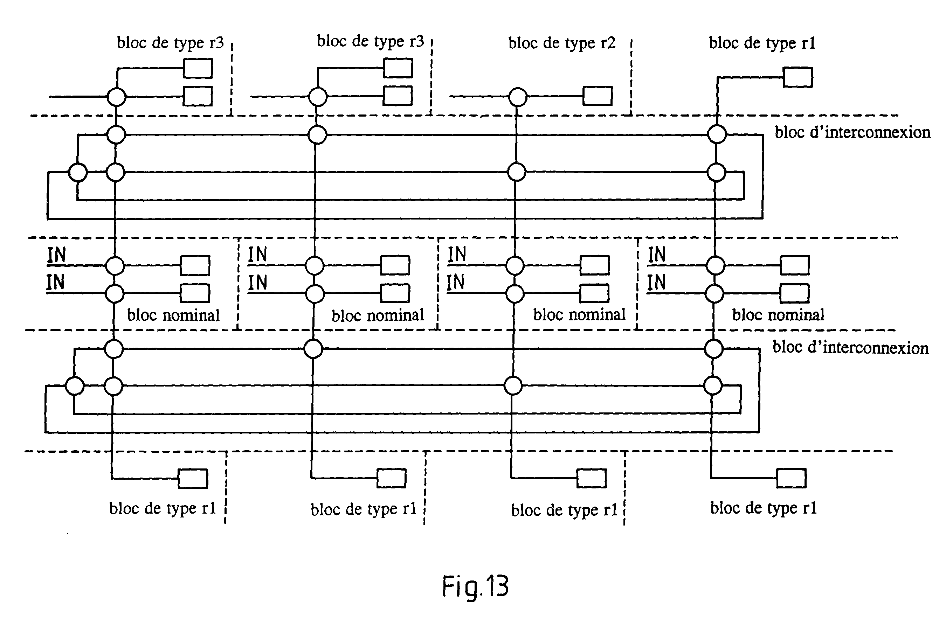

- la figure 13 est le schéma d'un réseau de commutateurs pour n=11, p=7.

Les figures 1A à 1D, 2A à 2C représentent deux types de commutateurs adaptés à être mis en oeuvre selon l'invention.

Les figures 1A à 1D représentent les quatre configurations possibles d'un commutateur de type R. Ce commutateur a quatre pattes 1, 2, 3 et 4 (numérotation dans le sens des aiguilles d'une montre) et un moyen de commutation adapté à :

- connecter deux pattes opposées en isolant les autres (figures 1A et 1B) ;
- connecter deux pattes voisines ainsi que les autres pattes (figures 1C et 1D).

Les figures 2A à 2C représentent les trois configurations possibles d'un commutateur de type T. Ce commutateur comporte de même quatre pattes et son noyau de commutation adapté à :

- connecter les pattes par paires de pattes opposées (figures 2A, qui correspond à elle seule aux figures 1A et 1B) ;
- connecter les pattes par paires de pattes voisines (figures 2B et 2C).

Selon l'invention, un réseau de commutateurs du type précité (quatre pattes et au moins trois configurations distinctes de connexion) destiné à connecter $n$ entrées à $n+p$ sorties, ou inversement, est formé de divers blocs ou modules :

- des blocs nominaux BN, tous identiques au module représenté à la figure 3, formés d'une chaîne de deux commutateurs connectés chacun à une entrée (repérée à gauche par IN) et une sortie (repérée à droite par un rectangle) ; ils ont deux pattes ;
- des blocs de redondance dont trois types ont été définis : le bloc de redondance R1 est simplement constitué d'une sortie - cf figure 4A ; le bloc de redondance R2 est constitué d'un commutateur connecté à une entrée et à une sortie en ayant une patte neutralisée - cf figure 4B ; et le bloc de redondance R3 est constitué d'un commutateur connecté à une entrée et une sortie - cf figure 4C ; ces divers blocs ont une seule patte ;
- des blocs d'interconnexion BIC dont la structure sera précisée plus loin ; ces blocs BIC sont constitués de commutateurs (il n'ont ni entrées ni sorties) dont le nombre et l'arrangement sont tels qu'ils ont un nombre pair de pattes, noté $2a$, et que l'on puisse combiner n'importe quelle combinaison de $a$ pattes choisies arbitrairement à n'importe quelle combinaison des pattes restantes.

Chacun de ces derniers est destiné à laisser passer jusqu'à a fautes ; c'est pourquoi il doit être capable de connecter en même temps les a pattes d'où proviennent les fautes à pattes pour lesquelles repartent les fautes. En fait une faute se produit quant une sortie est inutilisable et qu'il n'est plus possible de continuer à lui appliquer le signal arrivant par l'entrée connectée au même commutateur. Le but des BIC est de propager les fautes d'un bloc nominal à un autre jusqu'à ce qu'elles arrivent aux blocs de redondance.

Il est à noter que les blocs BN, R1, R2 et R3 ont une structure indépendante de $n$ et de $p$ ; c'est, comme on va le voir, leurs nombres respectifs qui dépendent de ces valeurs. En ce qui concerne les blocs d'interconnexion, on verra que leur structure ne dépend que de $p$.

Les figures 5 et 6 montrent le schéma de principe de deux réseaux de commutateurs de tailles différentes.

En règle générale, les blocs de redondance sont en nombre pair (valeur $2a$ déjà mentionnée) et sont répartis en deux étages extrêmes, ici représentés horizontaux, dans lesquels les blocs de redondance sont montés en parallèle. Un nombre $b$ d'étages intermédiaires (horizontaux ici aussi) sont disposés entre les étages extrêmes, et un nombre $b+1$ de blocs d'interconnexion sont connectés entre chaque étage. Ces étages intermédiaires comportent chacun un nombre $a$ de blocs nominaux montés en parallèle de sorte que, en combinaison avec les étages extrêmes, ils définissent un nombre $b$ de chaînes ou de colonnes.

Le réseau de la figure 5 comporte deux colonnes ($a=2$) et un seul bloc d'interconnexion (il n'y a pas de blocs nominaux ; $b = 0$).

Quant au réseau de la figure 6, il comporte trois colonnes ($a=3$) et trois étages intermédiaires ($b=3$).

On peut remarquer qu'il y a $ab$ blocs nominaux, et que les étages intermédiaires comportent ainsi $2ab$ entrées, $2ab$ sorties, et $2ab$ commutateurs.

Si $x1$ est le nombre de blocs redondants de type R1, $x2$ le nombre de blocs R2 et $x3$ le nombre de blocs R3, on peut écrire que leur total vaut $2a$ :

$$x1 + x2 + x3 = 2a$$

Si l'on dénombre le nombre d'entrées et de sorties que comportent ces divers blocs, on peut écrire :

- le nombre d'entrées de l'ensemble des blocs redondants vaut (x2 + x3),
- le nombre de sorties de cet ensemble vaut (x1 + x2 + 2x3)

Comme il y a déjà $2ab$ entrées et $2ab$ sorties dans les blocs nominaux, on peut alors écrire :

$$2ab + x2 = x3 = n$$

$$2ab + x1 + x2 + 2x3 = n + p$$

Si l'on appelle $c$ la différence (n - 2ab) et $d$ la différence (2a-p), on peut alors écrire :

$$x2 = d$$

$$x3 = c\text{-}d$$

$$x1 = p-c+d$$

La méthodologie permettant de construire un réseau à $\underline{n}$ entrées et $\underline{n+p}$ sorties (ou inversement), garantissant que l'on puisse connecter n'importe quelle combinaison des $\underline{n}$ entrées à n'importe quelle combinaison de n sorties choisies arbitrairement parmi les $\underline{n+p}$ sorties avec mise en oeuvre d'un nombre modéré de commutateurs (ce n'est pas nécessairement le minimum), peut se définir comme suit.

On définit $\underline{p'}$ comme étant le plus petit nombre pair égal ou supérieur à $\underline{p}$ ($p'=p$ si $\underline{p}$ est pair ; $p'=p+1$ si $\underline{p}$ est impair).

On définit l'opérateur $\underline{reste}$ tel que ($k\ \underline{reste}\ q$) est le nombre $\underline{s}$ compris entre 0 et $q-1$ pour lequel on peut trouver un entier relatif $\underline{t}$ tel que $s=k-q.t$ ; en d'autres termes $s=k$ (modulo q). A titre d'exemple $(-8)\ \underline{reste}\ 5=2$.

On choisit la valeur de $\underline{a}$ en sorte que $2a=p'$. La valeur $p'$ définit donc le nombre de blocs de redondance ($\underline{2a}$), le nombre de colonnes ($\underline{a}$) du réseau, ainsi que le nombre de pattes ($2a$) des blocs d'interconnexion.

La valeur de $\underline{b}$ est choisie en sorte que ($b+1$) soit le plus petit entier égal ou supérieur à $n/p'$ (en d'autres termes $\underline{b}$ est le plus grand entier strictement inférieur au rapport précité) ; on en en déduit que la différence $c=n-2ab$ est strictement positive et inférieure ou égale à $\underline{2a}$.

On a vu que le nombre de blocs nominaux est $\underline{2a}$.

Le choix des $\underline{p'}$ blocs de redondance se fait comme suit :

. si $\underline{p}$ impair :

- alors un bloc R2, (($n-1$) $\underline{reste}$ p') blocs R3 et ((p'-n) $\underline{reste}$ p') blocs R1

. si $\underline{p}$ pair :

- et si ($n\ \underline{reste}$ p') est non nul, alors il n'y a pas de blocs R2, il y a a ($n\ \underline{reste}$ p') blocs R3 et ((p'-n) $\underline{reste}$ p') blocs R1
- et si ($n\ \underline{reste}$ p') est njul alors il y a $\underline{p'}$ blocs R3.

On peut traduire les indications précitées comme suit, en utilisant les grandeurs $\underline{c}$ et $\underline{d}$ définies ci-dessus :

• les blocs R2 sont au nombre de $\underline{d}$ (soit 1, soit 0)
• les blocs R3 sont au nombre de ($c-d$)
• les blocs R1 sont au nombre de $p-(c-d) = p-c+d$.

On en déduit que le réseau de la figure 5, avec $a=2$ et $b=0$, correspond à $p=3$ ou 4 et n est au plus égal à 4. C'est un cas très simple.

Quant au schéma de la figure 6, avec $a=3$ et $b=3$, il correspond à p égal à 5 ou 6 et à $\underline{n}$ compris entre $2ab+1$ et $2ab+2a$ c'est-à-dire compris entre 19 et 24 ce qui correspond à un cas bien plus complexe que ceux visés dans les solutions connues.

Il est clair que lorsque $\underline{p}$ vaut 1 ou 2 (cas simple) les blocs d'interconnexion se résument à une simple liaison.

Lorsque $\underline{p}$ vaut 3 ou 4 ($a=2$), les blocs d'interconnexion peuvent être constitués d'un simple commutateur.

Lorsque $\underline{p}$ vaut 5 ou 6 ($a=3$), les blocs d'interconnexion peuvent être constitués de trois commutateurs connectés en anneau (voir la figure 7 où le bloc est repéré par la référence BIC (3)).

La figure 8A montre un exemple de réalisation d'un bloc d'interconnexion BIC (4) pour $p=7$ ou 8 ; il comporte deux chaînes de trois commutateurs et d'un septième commutateur connecté aux extrémités de chacune de ces chaînes, certains des commutateurs étant montés en série.

La figure 8B en montre une variante BIC (4)' utilisant également sept commutateurs.

En fait (voir la figure 9) on peut construire un bloc BIC (a) à partir de deux blocs BIC (a-1) correspondants à un ordre de redondance immédiatement inférieur BIC (a-1) : ces blocs sont connectés l'un à l'autre par (a-2) pattes et sont connectés chacun par une patte à un commutateur additionnel ; on peut vérifier que le nombre total de pattes laissées libres ((a-1) pour chaque bloc BIC (a-d) et 2 pour le commutateur additionnel) vaut bien 2a;

On peut vérifier que le bloc BIC (4)' de la figure 8B se déduit bien ainsi du bloc BIC (3) de la figure 7.

La figure 10 montre la construction d'un bloc BIC (5) pour $p=9$ ou 10, à partir de deux blocs BIC (4)'.

La figure 11A montre le schéma détaillé d'un réseau de commutateurs pour $n=11$ et $p=3$.

On peut vérifier que sa construction est bien conforme aux règles indiquées ci-dessus.

On peut vérifier que ce mode de construction conduit à utiliser, pour un BIC (a) un total de ($2^{a-1}-1$) commutateurs seulement.

En pratique ce sont généralement les sorties directement reliées à une entrée par un commutateur qui sont connectées aux équipements nominaux (ou inversement si le réseau à $\underline{n+p}$ entrées et $\underline{n}$ sorties). D'autre part, les entrées (ou les sorties) sont avantageusement classées, en pratique, en fonction des fréquences des signaux qui y transitent. Les entrées et les sorties sont repérées soit par le numéro de canal considéré, soit par la lettre R (pour redondant).

La position des commutateurs est schématisée par la seule indication de la ligne diamétrale (il y en a une dans les commutateurs de type R et deux dans les commutateurs de type T) qui permet une connexion entre des pattes opposées.

La figure 11B montre ce même réseau après que des fautes aient rendu inutilisables les sorties initialement connectées aux entrées 2, 6 et 7.

On appréciera que le décalage des sorties se fait de proche en proche, pour partie vers le haut et pour partie vers le bas, en respectant autant que possible le classement des sorties. Cela garantit que, même si les équipements reliés aux sorties (ou aux entrées) ont des caractéristiques différentes pour tenir compte des différences dans les signaux d'entrée (ou réciproquement) ayant justifié l'existence d'un classement, chaque signal sera après reconfiguration appliqué à un équipement adapté à le traiter correctement.

La figure 12A montre un réseau correspondant à n=20 et p=6 en configuration nominale. Il est conforme aux règles structurelles précitées.

La figure 12B montre ce réseau suite à des reconfigurations rendues nécessaires pour la mise hors service des sorties 3, 4, 5, 6, 7 et 10.

La figure 12C montre, en variante, ce même réseau suite à des reconfigurations rendues nécessaires par la mise hors service des sorties 6, 7, 8, 10, 13 et 20.

Les commentaires présentés à propos des figures 11A et 11B s'appliquent ici aussi.

Bien d'autres configurations sont possibles pour les commutateurs, aussi bien au départ qu'après mise hors service de certaines sorties.

La figure 13 montre un réseau correspondant à n=11 et p=7. Il est conforme aux règles précitées, avec quatre colonnes et un seul étage intermédiaire.

L'invention telle qu'elle vient d'être décrite ne prétend pas conduire dans tous les cas au nombre minimum de commutateurs (y compris pour les BIC eux-mêmes), par contre elle vise à donner une solution performante, pour un nombre modéré de commutateurs, et ce dans tous les cas.

On peut noter que lorsque l'on applique l'invention à des coupes, n, p) ayant déjà fait l'objet de propositions dans la littérature, elle conduit très généralement à un nombre inférieur de commutateurs pour un niveau donné de fiabilité et de performances. Ainsi :

- 13 commutateurs pour n=10, p=4
- 15 commutateurs pour n=12, p=4
- etc..

Il va de soi que la description qui précède n'a été proposée qu'à titre d'exemple non limitatif et que de nombreuses variantes peuvent être proposées par l'homme de l'art sans sortir du cadre de l'invention. C'est ainsi bien sûr que l'invention se généralise à tous les cas où il y a des équipements redondants pour traiter des signaux, voire des fluides, circulant en parallèle.

**Revendications**

1. Réseau de commutateurs ayant $\underline{n}$ entrées et $\underline{n+p}$ sorties (ou inversement) destiné à connecter $\underline{n}$ canaux à $\underline{n}$ circuits de traitement quelconque d'un ensemble comportant $\underline{n}$ circuits de traitement nominaux et $\underline{p}$ circuits de traitement redondants, $\underline{n}$ et $\underline{p}$ étant des entiers quelconques prédéterminés tels $\underline{p}$ soit supérieur à 2 et que le couple (n, p) soit différent du couple (8, 4), les commutateurs étant du type à quatre pattes et au moins trois positions, ce réseau comportant:

- deux étages extrêmes formés chacun d'un nombre a de blocs redondants (R1, R2, R3) montés en parallèle,
- un nombre $\underline{b}$ d'étages intermédiaires successifs, disposés entre les étages extrêmes et contenant chacun un nombre $\underline{a}$ de blocs nominaux (N) montés en parallèle,
- un nombre (b + 1) de blocs d'interconnexion montés chacun entre deux des étages intermédiaires ou extrême, ces blocs et ces nombres étant définis comme suit :

  • $\underline{a}$ est tel que $\underline{2a}$ soit le plus petit entier supérieur ou égal à p,
  • $\underline{b}$ est le nombre entier tel que le nombre $\underline{c}$ défini par c = n - 2ab soit strictement positif et inférieur ou égal à $\underline{2a}$,
  • chaque bloc nominal est formé d'une chaîne de deux commutateurs connectés chacun à une entrée et une sortie,
  • chaque bloc redondant étant, soit d'un premier type constitué d'une sortie, soit d'un second type constitué d'un commutateur connecté à une entrée et à une sortie en ayant une patte neutralisée, soit d'un troisième type constitué d'un commutateur connecté à une entrée et deux sorties,
  • les deux étages extrêmes comportant conjointement un nombre $\underline{d}$ égal à (2a - p) de blocs redondants du second type, un nombre (c - d) de commutateurs du troisième type, et un nombre de (p - c + d) de commutateurs du premier type,
  • chaque bloc d'interconnexion ayant un nombre $\underline{2a}$ de pattes et étant constitué de commutateurs connectés entre eux tels que n'importe quelle combinaison de $\underline{a}$ pattes de ce bloc puisse être mise en connexion avec n'importe quelle combinaison de $\underline{a}$ autres pattes.

2. Réseau de commutateurs selon la revendication 1, caractérisé en ce que la valeur de $\underline{p}$ est supérieure à 4.

3. Réseau de commutateurs selon la revendication 1 ou la revendication 2, caractérisé en ce que la valeur de $\underline{p}$ est impaire.

4. Réseau de commutateurs selon l'une quelconque des revendications 1 à 3, caractérisé en ce que la valeur de $\underline{n}$ est supérieure à 12.

5. Réseau de commutateurs selon l'une quelconque des revendications 1 à 3, caractérisé en ce que chaque bloc d'interconnexion est constitué d'une chaîne de trois commutateurs connectés en anneau, lorsque a vaut 3.

6. Réseau de commutateurs selon l'une quelconque des revendications 1 à 3, caractérisé en ce que chaque bloc d'interconnexion (BIC (4)) est constitué, lorsque a vaut 4, par deux chaînes formées de trois commutateurs, et d'un septième commutateur connecté aux deux extrémités de chacune des deux chaînes.

7. Réseau de commutateurs selon l'une quelconque des revendications 1 à 6, caractérisé en ce que le bloc d'interconnexion (BIC (a)) comporte deux blocs d'interconnexion (BIC (a-1)) à 2(a-1) pattes et un commutateur connecté à chacun de ces derniers par une patte.

8. Réseau de commutateurs selon l'une quelconque des revendications 1 à 7, caractérisé en ce que le bloc d'interconnexion est constitué d'un nombre de commutateurs inférieur ou égal à $(2^{a-1}-1)$.

Fig.1A

Fig.1B

Fig.1C

Fig.1D

Fig.2A

Fig.2B

Fig.2C

IN
IN

BN

Fig.3

IN

R2

Fig.4B

R1

Fig.4A

IN

R3

Fig.4C

| bloc de type r | bloc de type r |
|---|---|
| bloc d'interconnexion | |
| bloc de type r | bloc de type r |

Fig.5

| bloc de type r | bloc de type r | bloc de type r |
|---|---|---|

| bloc d'interconnexion |
|---|

| bloc nominal | bloc nominal | bloc nominal |
|---|---|---|

| bloc d'interconnexion |
|---|

| bloc nominal | bloc nominal | bloc nominal |
|---|---|---|

| bloc d'interconnexion |
|---|

| bloc nominal | bloc nominal | bloc nominal |
|---|---|---|

| bloc d'interconnexion |
|---|

| bloc de type r | bloc de type r | bloc de type r |
|---|---|---|

Fig.6

BIC(3)

Fig.7

BIC(4)

Fig.8A

Fig.10

Fig.8B

BIC(4)´

BIC(4)´

BIC(4)´

Fig.9

BIC(a-1)

BIC(a-1)

BIC(5)

BIC(a)

bloc de type r3          bloc de type r3

IN 1          1          IN 2          2
              R                         R

- - - - - - - - - - - - - - - - - - - - - - - - - - - - - -
                              bloc d'interconnexion
- - - - - - - - - - - - - - - - - - - - - - - - - - - - - -

bloc nominal             bloc nominal

IN 3          3          IN 4          4
IN 5          5          IN 6          6

- - - - - - - - - - - - - - - - - - - - - - - - - - - - - -
                              bloc d'interconnexion
- - - - - - - - - - - - - - - - - - - - - - - - - - - - - -

bloc nominal             bloc nominal

IN 7          7          IN 8          8
IN 9          9          IN 10         10

- - - - - - - - - - - - - - - - - - - - - - - - - - - - - -
                              bloc d'interconnexion
- - - - - - - - - - - - - - - - - - - - - - - - - - - - - -

R                        IN 11         11

bloc de type r1          bloc de type r2

Fig. 11A

12

bloc de type r3                    bloc de type r3

IN 1                               IN 2

1

4                    2

bloc d'interconnexion

bloc nominal                       bloc nominal

IN 3                               IN 4

IN 5                               IN 6

3                    6

5

bloc d'interconnexion

bloc nominal                       bloc nominal

IN 7                               IN 8

IN 9                               IN 10

7                    8

10

bloc d'interconnexion

9                    IN 11                   11

bloc de type r1                    bloc de type r2

Fig.11B

bloc de type r3

bloc de type r1

bloc de type r3

1

IN1

R

R

IN2

2

R

bloc d'interconnexion

bloc nominal

bloc nominal

bloc nominal

IN 3

3

IN 4

4

IN 5

5

IN 6

6

IN 7

7

IN 8

8

bloc d'interconnexion

bloc nominal

bloc nominal

bloc nominal

IN 9

9

IN 10

10

IN 11

11

IN 12

12

IN 13

13

IN 14

14

bloc d'interconnexion

bloc nominal

bloc nominal

bloc nominal

IN 15

15

IN 16

16

IN 17

17

IN 18

18

IN 19

19

IN 20

20

bloc d'interconnexion

bloc de type r1

R

R

bloc de type r1

bloc de type r1

R

Fig.12A

14

bloc de type r3

bloc de type r1

bloc de type r3

IN 1     1    3

4    IN 2     2    5

bloc d'interconnexion

IN 3    bloc nominal    IN 4    bloc nominal    IN 5    bloc nominal

IN 6    IN 7    IN 8    8

bloc d'interconnexion

IN 9    bloc nominal    IN 10    bloc nominal    IN 11    bloc nominal

IN 12    6    9    IN 13    10    IN 14    7    11

bloc d'interconnexion

IN 15    bloc nominal    IN 16    bloc nominal    IN 17    bloc nominal

IN 18    12    15    IN 19    13    16    IN 20    14    17

bloc d'interconnexion

bloc de type r1    18    20    bloc de type r1

bloc de type r1

19

Fig.12B

15

bloc de type r3          bloc de type r1          bloc de type r3

IN 1          1          4          IN 2          2
              3                                    5

bloc d'interconnexion

bloc nominal          bloc nominal          bloc nominal

IN 3          6          IN 4          7          IN 5          8
IN 6                     IN 7                     IN 8

bloc d'interconnexion

bloc nominal          bloc nominal          bloc nominal

IN 9          10          IN 10                     IN 11          11
IN 12         9           IN 13                     IN 14          14

bloc d'interconnexion

bloc nominal          bloc nominal          bloc nominal

IN 15          12          IN 16          13          IN 17          17
IN 18          15          IN 19          16          IN 20

bloc d'interconnexion

bloc de type r1          18          20          bloc de type r1

bloc de type r1

19

Fig. 12 C

16

Fig.13

**Office européen des brevets**

**RAPPORT DE RECHERCHE EUROPEENNE**

Numero de la demande

EP 96 40 1302

## DOCUMENTS CONSIDERES COMME PERTINENTS

| Catégorie | Citation du document avec indication, en cas de besoin, des parties pertinentes | Revendication concernée | CLASSEMENT DE LA DEMANDE (Int.Cl.6) |
|---|---|---|---|
| A | DE-A-43 17 856 (ANT NACHRICHTENTECHNIK GMBH)<br>* le document en entier *<br>--- | 1 | H01P1/12 |
| D,A | FR-A-2 698 746 (ALCATEL ESPACE S.A.)<br>* page 5, ligne 29 - page 6, ligne 11; figure 5 *<br>--- | 1 | |
| A | US-A-4 061 989 (PETRELIS)<br>* colonne 4, ligne 52 - colonne 5, ligne 22; figure 10 *<br>----- | 1 | |

| | | | DOMAINES TECHNIQUES RECHERCHES (Int.Cl.6) |
|---|---|---|---|
| | | | H01P<br>H04B |

Le présent rapport a été établi pour toutes les revendications

| Lieu de la recherche | Date d'achèvement de la recherche | Examinateur |
|---|---|---|
| LA HAYE | 23 Août 1996 | Den Otter, A |

CATEGORIE DES DOCUMENTS CITES

X : particulièrement pertinent à lui seul
Y : particulièrement pertinent en combinaison avec un autre document de la même catégorie
A : arrière-plan technologique
O : divulgation non-écrite
P : document intercalaire

T : théorie ou principe à la base de l'invention
E : document de brevet antérieur, mais publié à la date de dépôt ou après cette date
D : cité dans la demande
L : cité pour d'autres raisons
........................................................
& : membre de la même famille, document correspondant

EPO FORM 1503 03.82 (P04C02)